Europäisches Patentamt

European Patent Office

Office européen des brevets

(19)

(11) Veröffentlichungsnummer: **0 050 765**
**B1**

(12) # EUROPÄISCHE PATENTSCHRIFT

(45) Veröffentlichungstag der Patentschrift:
20.06.84

(21) Anmeldenummer: 81108061.3

(22) Anmeldetag: 08.10.81

(51) Int. Cl.³: **C 03 B 7/08, C 03 B 9/193,
C 03 B 9/40, C 03 B 11/16**

(54) **Vorrichtung zur Einstellung der Masse von Posten thermoplastischen Materials.**

(30) Priorität: 29.10.80 DE 3040762

(43) Veröffentlichungstag der Anmeldung:
05.05.82 Patentblatt 82/18

(45) Bekanntmachung des Hinweises auf die Patenterteilung:
20.06.84 Patentblatt 84/25

(84) Benannte Vertragsstaaten:
AT BE CH FR GB IT LI LU NL SE

(56) Entgegenhaltungen:
DE - A - 2 243 489
DE - A - 2 334 431
US - A - 1 642 722
US - A - 1 718 608
US - A - 3 180 718
US - A - 3 192 027
US - A - 3 874 866
US - A - 4 002 454

(73) Patentinhaber: HERMANN HEYE, Allee,
D-3063 Obernkirchen (DE)

(72) Erfinder: Becker, Kurt, Dr.-Ing., Vor den Tannen 7,
D-3063 Obernkirchen (DE)
Erfinder: Geisel, Gerhard, Georgstrasse 13,
D-3062 Bückeburg (DE)
Erfinder: Schwarzer, Siegfried, Nr. 14, D-3071 Stöckse
(DE)
Erfinder: Seidel, Hans-Georg,
Gerhardt-Hauptmann-Weg 7, D-3260 Rinteln (DE)

(74) Vertreter: Kosel, Peter, Dipl.-Ing. et al, Patentanwälte
Dipl.-Inge. Röse, Kosel & Sobisch Odastrasse 4a
Postfach 129, D-3353 Bad Gandersheim 1 (DE)

## Beschreibung

Die Erfindung betrifft eine Vorrichtung der im Oberbegriff des Anspruchs 1 angegebenen Art.

Bei einer bekannten Vorrichtung dieser Art (US-PS Nr. 3180718, Fig. 8 und 9) sind eine Primärwicklung und zwei Sekundärwicklungen des Differentialtransformators jeweils in einer äusseren Umfangsnut eines stationären, aus elektrisch isolierendem Stoff hergestellten Einlassrohrs für den Pressstempel kühlende Druckluft eingebettet. Der Pressstempel ist an einer rohrförmigen Kolbenstange aus Metall befestigt, deren freies Ende das Einlassrohr als Betätigungselement umgibt. Durch Bewegung der Kolbenstange relativ zu den Wicklungen liefert der Differentialtransformator ein variables Ausgangssignal, das proportional der Bewegung des Pressstempels ist und ein Mass sowohl für die Bewegung als auch für die Eindringtiefe des Pressstempels darstellt. Das Ausgangssignal wird vorzugsweise angezeigt und/oder aufgezeichnet, soll aber alternativ auch zur Kontrolle der die Postengrösse kontrollierenden Variablen verwendet werden können. Einzelheiten einer solchen Kontrolle sind allerdings nicht offenbart.

In der älteren europäischen Patentanmeldung EP-A1 Nr. 21066, veröffentlicht am 7.1.1981, wird für I.S.-Glasformmaschinen vorgeschlagen, den Endbereich des Weges des Betätigungskolbens des Pressstempels oder der Kolbenstange des Betätigungskolbens des Pressstempels oder der Kolbenstange des Betätigungskolbens zu messen. Der zurückgelegte Weg soll mittels eines Messwertgebers erfasst und sichtbar gemacht werden. Dies soll z.B. durch mehrere, im Bewegungsbereich angeordnete elektrische Kontakte geschehen, die nacheinander abgetastet werden. Es ist auch die Möglichkeit angedeutet, die vom Messwertgeber erfassten Werte zur Regelung der Grösse der den Vorformen zugeführten Glasposten zu verwenden, z.B. durch Verstellen der die Glasposten vom Strang abtrennenden Schere. Einzelheiten einer solchen Regelung sind nicht offenbart.

Aus der DE-Offenlegungsschrift Nr. 2334431 (entspr. US-PS Nr. 3846107) ist eine Regeleinrichtung an sich bekannt, bei der vorzugsweise nur bei Unregelmässigkeiten in der Produktion (S. 9, Zeilen 6 bis 9) das Absolutgewicht fertiger Glasartikel mit einer Wägezelle 170 ermittelt und ein entsprechendes Spannungssignal in einen Proportionalregler 119 geleitet wird (S. 8, Zeilen 19 bis 33), der gemäss S. 10, Zeile 34 bis S. 11, Zeile 8, durch Anheben oder Senken eines Drehrohres 42 das Gewicht der Glasposten G regelt. Diese Regeleinrichtung arbeitet im Blas-Blase-Prozess hinreichend genau. Die Totzeit als Zeitdifferenz zwischen einer Verstellung des Drehrohres und dem Wägen des mit dem im Gewicht neu eingestellten Posten hergestellten fertigen Glasartikels ist hierbei gross. Die Genauigkeit ist ferner durch den Messfehler der Wägezelle begrenzt. Nachteilig ist bei dieser Regeleinrichtung ferner, dass während des Wägens einerseits die Kühlluftzufuhr zu der Absetzplatte 114 (S. 7, Zeilen 21 bis 24) und andererseits die Rein- oder Spülluftzufuhr zu dem Waagenlager 150 (S. 9, Zeile 32 bis S. 10, Zeile 5) unterbrochen werden muss.

Aus der „Siemens-Zeitschrift", 51 (1977), Heft 9, S. 767 bis 769, ist eine Regeleinrichtung an sich bekannt, die in sehr ähnlicher Weise wie gemäss der DE-Offenlegungsschrift Nr. 2334431 das Absolutgewicht der fertigen Glasartikel ermittelt und zur Regelung des Gewichts der Glasposten verwendet. Die Totzeit ist hier allerdings noch grösser, weil die Artikelwaage erst hinter dem Maschinenförderband angeordnet ist (Bilder 1 und 2). Auch diese Regeleinrichtung arbeitet im Blas-Blase-Prozess hinreichend genau. So zeigt auch Bild 4 Kenndaten eines typischen Blas-Blase-Artikels.

Der Erfindung liegt die Aufgabe zugrunde, eine schnell reagierende, genaue Regelung des Füllgrades der Vorform und damit der Eindringtiefe des Pressstempels zu realisieren.

Diese Aufgabe ist durch die im Kennzeichnungsteil des Anspruchs 1 angegebenen Merkmale gelöst. Der Pressstempel befindet sich in jedem Arbeitsspiel nur kurzzeitig in seiner Stellung mit der jeweils grössten Eindringtiefe, die gemessen und in dem Maximalwertspeicher gespeichert wird. Dieser Speicherwert liegt naturgemäss nur während des letzten Teils jedes Arbeitsspiels vor und wird daher in der nachgeschalteten *sample-and-hold*-Schaltung gespeichert, wo er vom Beginn dieser Umspeicherung an bis zur nächsten Übernahme eines Signals aus dem Maximalwertspeicher als stetiges Signal zur Verfügung steht. Sobald diese Umspeicherung abgeschlossen ist, kann der Speicherwert in dem Maximalwertspeicher zur Aufnahme des nächstfolgenden Speicherwerts gelöst werden. Auf diese Weise wird in jedem Arbeitsspiel ein die maximale Eindringtiefe des Pressstempels verkörperndes Signal gewonnen, das sogleich nach dem Pressvorgang bei Bedarf zu einer Korrektur der Stellung des Dosierelements führt. So werden eventuelle Massenabweichungen aufeinanderfolgender Posten von einer vorgegebenen optimalen Masse in dem Herstellungsprozess so früh und so genau wie möglich festgestellt und mit geringstem Aufwand beseitigt oder minimiert. Zweckmässigerweise wird als Dosierelement ein an sich bekanntes Rohr, entweder ein Drehrohr oder ein nicht drehendes Rohr, verwendet, das in dem Speiserkopf eines Speisers teilweise in das darin befindliche thermoplastische Material, insbesondere das schmelzflüssige Glas, eintaucht. Zwischen einer Unterkante dieses Rohres und einem einen oder mehrere Durchlässe für Stränge des thermoplastischen Materials aufweisenden Boden des Speiserkopfes besteht normalerweise ein Ringspalt, der die Zuflussgeschwindigkeit des Materials zu dem wenigstens einen Durchlass bestimmt. Üblicherweise ist ferner im Inneren des Rohres ein sogenannter Plunger in axialer Richtung bei jedem Arbeitsspiel auf und ab bewegbar. Der Plunger taucht ebenfalls in das Material ein und beeinflusst durch seine oszillierende Bewegung die Ausflusscharakteristik des wenigstens einen Stranges aus dem zugehörigen Durchlass des Speiserkopfes.

Die Merkmale des Anspruchs 2 sind dann von Vorteil, wenn im Laufe des Einsatzes der Formmaschine Pressstempel unterschiedlichen maximalen Durchmessers verwendet werden. Die Bewertungsschaltung ermöglicht es dann, den optimierten Abgleich des verwendeten PI- oder PID-Reglers beizubehalten.

Die Merkmale der Ansprüche 3 und 4 bieten dem Maschinenführer jeweils optische Informationen über den derzeitigen Betriebszustand bzw. die zeitliche Entwicklung wichtiger Kenngrössen aus dem Maschinenbetrieb.

Die Merkmale des Anspruchs 5 bringen eine erhebliche Erleichterung der Bedienung der Formmaschine insofern, als bei Erreichen eines Endes des Stellbereichs des Rückführgebers der Regelkreis nicht mehr von Hand unterbrochen und der Rückführgeber nicht mehr von Hand in eine Mittenlage zurückgestellt werden muss. Solche Neujustierungen des Stellbereichs des Rückführgebers sind in der Praxis in Abständen aufgrund verschiedener Störgrössen und Abbrandes im Bereich des Dosierelements unerlässlich.

Anspruch 6 bietet eine einfache Möglichkeit, von der selbsttätigen Regelung auf Handverstellung des Dosierelements überzugehen. Dabei ist die Elektromagnetkupplung insbesondere dann von Vorteil, wenn in die Antriebsverbindung zwischen dem Stellmotor und dem Dosierelement ein Untersetzungsgetriebe mit verhältnismässig hohem Untersetzungsverhältnis eingeschaltet ist.

Mit den Merkmalen des Anspruchs 7 ist es möglich, Betriebszustände schnell zu erfassen und zu berücksichtigen, bei denen die Masse des Postens entweder viel zu klein und im Grenzfall Null oder aber viel zu gross ist. Eine unterschiedslose Verarbeitung der daraus gewonnenen Signale würde zu in der Praxis ungerechtfertigt grossen Stellbewegungen an dem Dosierelement führen. Die Grenzwertüberwachungsschaltung erkennt solche Zustände und veranlasst im Zusammenwirken mit der Steuerlogikschaltung einen sofortigen Übergang von dem automatischen Regelbetrieb auf den Handbetrieb. Sobald die zugrundeliegende Störung beseitigt ist, kann schnellstens wieder auf den Automatikbetrieb übergegangen werden.

Die Merkmale des Anspruchs 8 sorgen für einen selbsttätigen sofortigen Übergang von dem automatischen Regelbetrieb auf den Handbetrieb, solange dem Formwerkzeug überhaupt keine Posten zugeführt werden. Sobald wieder Posten geliefert werden, bleiben die Signale gemäss Anspruch 8 aus, und die Anlage wird selbsttätig auf automatischen Regelbetrieb zurückgestellt.

Die Vorrichtung gemäss Anspruch 9 bietet einen einfachen und dennoch sehr funktionssicheren Weggeber, der vor Beschädigung oder Beeinträchtigung von aussen geschützt ist. Er besitzt nur den für eine sichere Datenerfassung mindestens erforderlichen Betriebsweg. Auch der Differentialtransformator und das Betätigungselement sind geschützt und raumsparend untergebracht.

Anspruch 10 kennzeichnet einen anderen Weggeber, mit dem eine sichere Übertragung der Weginformation auch über grössere Entfernungen möglich ist.

Die Merkmale des Anspruchs 11 sorgen für eine definierte Ausgangslage des Weggebers.

Gemäss Anspruch 12 lassen sich wichtige Elemente des Weggebers in den nötigen Grenzen relativ zu der Welle einstellen und dadurch an neue oder sich ändernde Betriebsbedingungen anpassen.

Die Merkmale des Anspruchs 13 sorgen für eine definierte Ausgangsstellung der Stange des Weggebers.

Die Merkmale des Anspruchs 14 gestatten es, nur den letzten Teil der Hinbewegung des Pressstempels für die Betätigung des Weggebers auszunutzen. Der den Zylinder tragende Träger kann z.B. durch einen Kurbeltrieb sehr exakt antreibbar sein.

Die Erfindung wird nachstehend anhand der in den Zeichnungen dargestellten Ausführungsbeispiele näher erläutert. Es zeigen:

Fig. 1 einen Längsschnit durch einen Teil eines Pressstempelmechanismus mit einem Weggeber,

Fig. 2 die Ansicht gemäss Linie 2-2 in Fig. 1, teilweise im Schnitt,

Fig. 3 einen Längsschnitt durch einen zusätzlichen Teil des Weggebers gemäss Fig. 1 mit zugehörigem Differentialtransformator,

Fig. 4 die Schnittansicht gemäss Linie 4-4 in Fig. 3,

Fig. 5 einen schematischen Längsschnitt durch einen anderen Pressstempelmechanismus mit Weggeber und Differentialtransformator,

Fig. 6 ein Detail der Fig. 5 in vergrösserter Darstellung,

Fig. 7 ein der Fig. 6 entsprechendes Detail,

Fig. 8 ein Blockschaltbild einer Regelschaltung für die Einstellung eines Dosierelements,

Fig. 9 Einzelheiten einer den Stempeldurchmesser berücksichtigenden Bewertungsschaltung gemäss Fig. 8, und

Fig. 10 ein Impulsdiagramm zu dem Blockschaltbild gemäss Fig. 8.

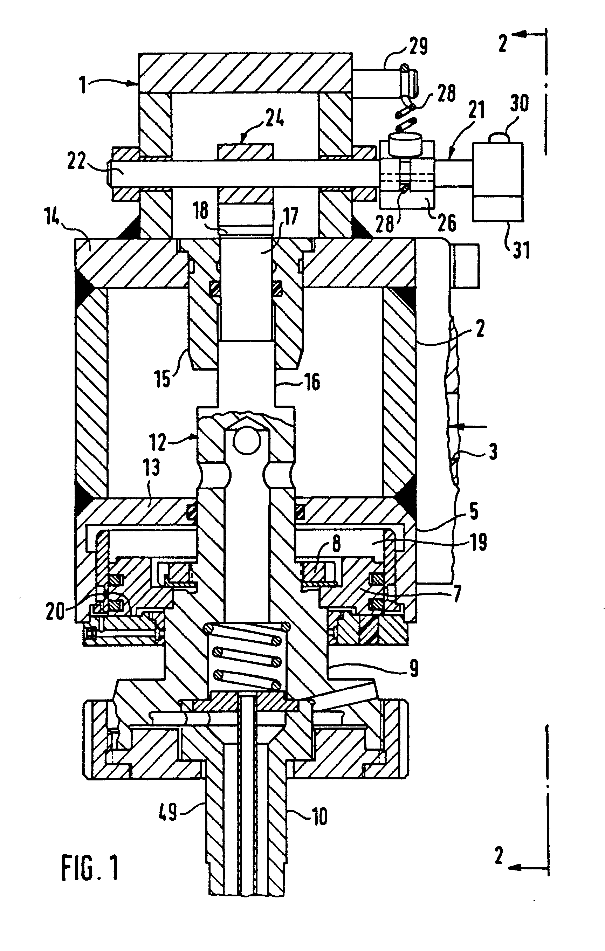

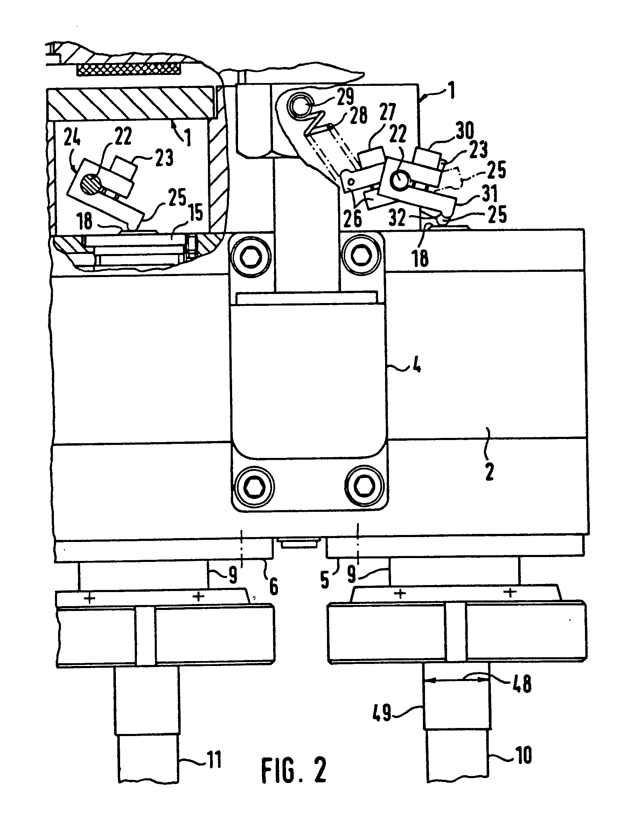

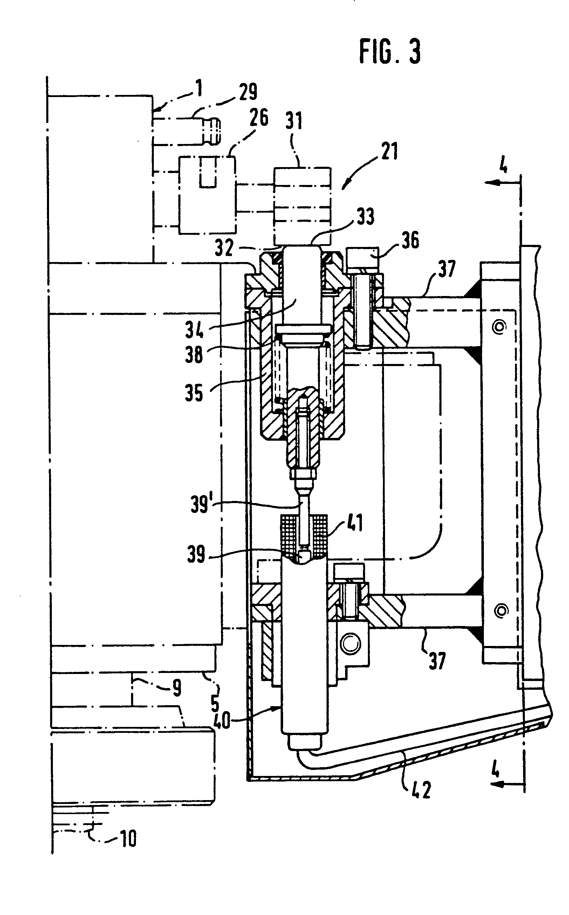

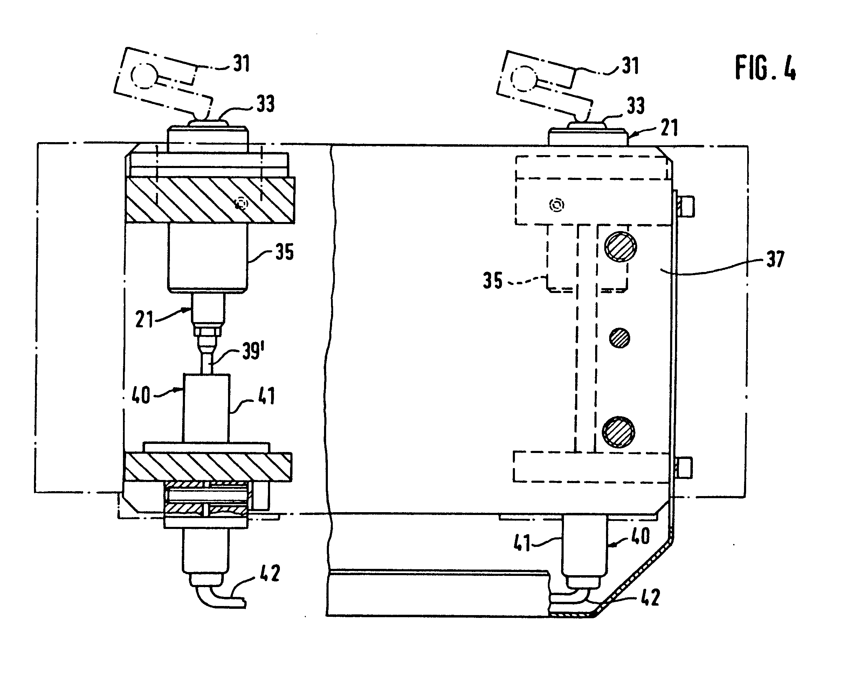

Bei dem in den Fig. 1 bis 4 dargestellten Ausführungsbeispiel ist ein Pressstempelhalter 1 in einer nicht gezeigten Führung in senkrechter Richtung bewegbar gelagert und durch einen nicht gezeichneten Kurbeltrieb zwischen einer in den Fig. 1 und 2 dargestellten Höchststellung und einer in den Fig. 3 und 4 strichpunktiert angedeuteten Tiefststellung antreibbar.

An der Unterseite des Pressstempelhalters 1 ist ein Kühlfluidkasten 2 angeschweisst, in dessen Innenraum Kühlfluid, z.B. Kühlluft, durch eine Einlassöffnung 3 eines Anschlussstücks 4 gelangt.

Mit der Unterseite des Kühlfluidkastens 2 sind zwei im Abstand voneinander angeordnete Zylinder 5 und 6 verschweisst, in denen jeweils ein Kolben 7 verschiebbar geführt ist. An dem Kolben 7 des Zylinders 5 ist mittels einer Mutter 8 eine Pressstempelaufnahme 9 befestigt, an der ein Pressstempel 10 festgelegt ist.

In gleicher Weise ist mittelbar an dem Kolben 7 des Zylinders 6 ein Pressstempel 11 befestigt.

Da die Konstruktion der Zylinder 5, 6 und aller Verbindungselemente bis zu den Pressstempeln 10, 11 gleich ist, genügt es, eine dieser Vorrichtungen zu beschreiben.

Die Pressstempelaufnahme 9 ist rückwärtig als Kolbenstange 12 ausgebildet, die einerseits in einer Trennwand 13 zwischen dem Kühlfluidkasten 2 und dem Zylinder 5 und andererseits in einer in eine Deckenwand 14 des Kühlfluidkastens 2 eingesetzten Buchse 15 verschiebbar gelagert ist. Die Kolbenstange 12 ist durch ein Zwischenstück 16 von nicht kreisförmiger Querschnittsfläche und ein entsprechendes Gegenlager in der Buchse 15 vor Drehung um die eigene Längsachse gesichert. Ein Endstück 17 der Kolbenstange 12 weist kreisförmige Querschnittsfläche auf und ragt mit einer Endfläche 18 oben aus der Buchse 15 heraus.

Einem Innenraum 19 des Zylinders 5 wird durch eine nicht dargestellte Zuführleitung ein Druckfluid zugeleitet, das zu einer Presskraftbegrenzung an dem Pressstempel 10 führt.

Die Pressstempel 10, 11 wirken in an sich bekannter Weise mit einer im einzelnen nicht gezeichneten Doppelform einer Glasformmaschine zusammen, die nach dem Press-Blas-Verfahren arbeitet. Den Press- oder Vorformen der Glasformmaschine wird dabei in an sich bekannter Weise aus einem Tropfenspeiser in jedem Arbeitsspiel ein Posten schmelzflüssigen Glases zugeführt. Sobald sich der Posten in der Vorform befindet, dringt der Pressstempel 10, 11 in die Vorform ein und verdrängt die Glasmasse in gewünschter Weise. Die Eindringtiefe des Pressstempels 10, 11 in die Vorform richtet sich angesichts der Inkompressibilität der Glasmasse nach dem Volumen des jeweils eingebrachten Glastropfens. Liegt dieses Volumen unterhalb eines optimalen Volumenwerts, so fährt der Pressstempel 10, 11 bis in seine in Fig. 1 gezeichnete tiefste Anschlagstellung, in der der Kolben 7 an einer Anschlagfläche 20 des Zylinders 5 anliegt. In diesem Fall dringt der Pressstempel zu tief vor und schwächt damit den Boden des in der Vorform gepressten Kübels. Ausserdem wird dabei die Mündung des Kübels nicht voll ausgepresst. Die Folge wäre ein fehlerhafter Hohlglasgegenstand, also Ausschuss.

Befindet sich andererseits ein Glasposten in der Vorform, dessen Volumen grösser als das optimale Glasvolumen ist, dann wird zwar durch den eindringenden Pressstempel der Innenraum der Vorform voll mit Glasmasse ausgefüllt, jedoch kann der Pressstempel dann nicht bis in seine optimale Tiefststellung vordringen. Auch ein zu grosses Glasvolumen der Glasposten führt zu Ausschussware. Es kommt also darauf an, das Glasvolumen des Postens im Augenblick des Pressens zu optimieren. Die Volumentoleranz beträgt z.B. ± 1 bis 2% vom Optimalvolumen.

Die Fig. 1 bis 4 zeigen Mittel, um die jeweilige maximale Eindringtiefe des Pressstempels 10, 11 in die zugehörige Vorform mechanisch abzugreifen. Dazu ist ein Weggeber 21 vorgesehen, der eine an dem Pressstempelhalter 1 schwenkbar gelagerte Welle 22 aufweist. Die Welle 22 trägt, durch eine Schraube 23 in der Winkelstellung bezüglich der Welle 22 einstellbar befestigt, ein Taststück 24. Das Taststück 24 liegt mit einem Tastarm 25 in ständiger Berührung mit der Endfläche 18 der Kolbenstange 12. Dies wird ermöglicht durch einen Vorspannarm 26, der mittels einer Schraube 27 in seiner Winkelstellung einstellbar an der Welle 21 befestigt ist. An einem freien Ende des Vorspannarms 26 ist eine Zugfeder 28 angelenkt, deren anderes Ende an einem Federbolzen 29 des Pressstempelhalters 1 angelenkt ist.

Weiter aussen ist an der Welle 22 mittels einer Schraube 30 ein Betätigungsarm 31 in der Winkelstellung bezüglich der Welle 22 einstellbar befestigt.

Fig. 3 zeigt im Gegensatz zu Fig. 1 den Pressstempelhalter 1 mit allen davon getragenen Elementen in seiner Tiefststellung im unteren Totpunkt des vorerwähnten, nicht gezeichneten Kurbeltriebs. Dabei liegt der Betätigungsarm 31 mit einem freien Ende 32 auf einer Endfläche 33 einer axial bewegbaren Stange 34 des Weggebers 21 an. Die Stange 34 ist in einem Gehäuse 35 geführt, das mit Schrauben 36 an einer maschinenfesten Konsole 37 befestigt ist. Die Stange 34 ist durch eine an dem Gehäuse 35 abgestützte Druckfeder 38 in eine obere Ausgangsstellung vorgespannt, in der die vorerwähnte Berührung zwischen dem freien Ende 32 des Betätigungsarms 31 und der Endfläche 33 besteht. Diese Ausgangsstellung ist in Fig. 3 gezeichnet.

In ein unteres Ende der Stange 34 ist ein nicht magnetisierbarer Träger Kern 39' für einen magnetisierbaren Kern 39 eines Differentialtransformators 40 eingeschraubt. Der Kern 39 erstreckt sich in einen Spulenkörper 41 des Differentialtransformators 40. Der Spulenkörper 41 ist mit einem Gehäuse axial einstellbar an der Konsole 37 gehalten.

Weitere Einzelheiten der Anordnung der beiden Weggeber 21 und der beiden zugehörigen Differentialtransformatoren 40 zeigt Fig. 4.

In den Fig. 3 und 4 ist jeweils an dem Differentialtransformator 40 ein elektrisches Verbindungskabel 42 eingezeichnet.

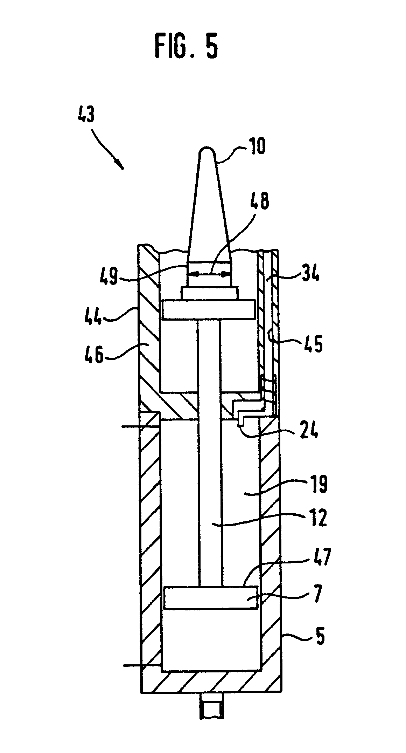

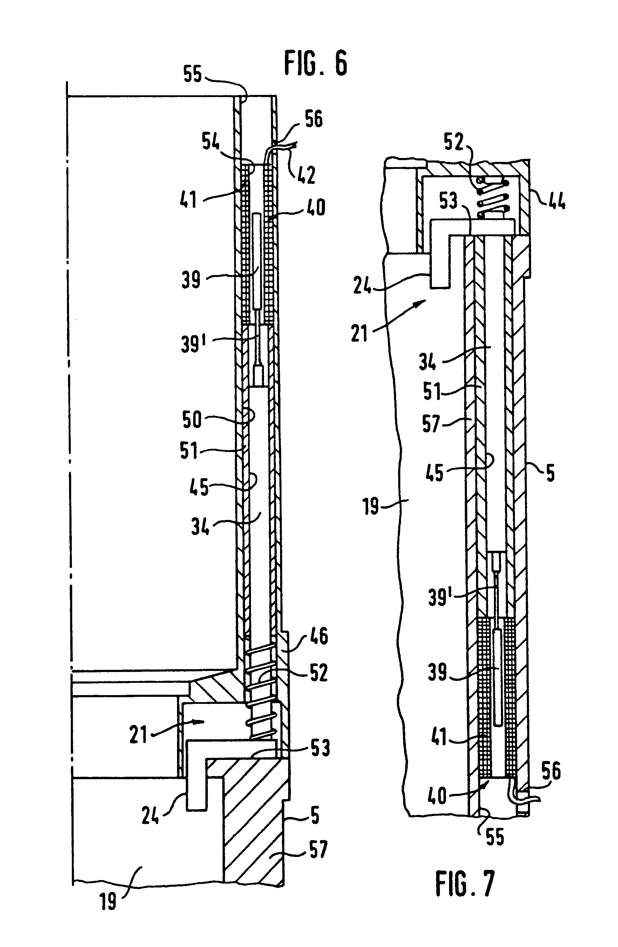

Die Fig. 5 und 6 betreffen eine andere Ausführungsform für einen Pressstempelmechanismus 43 einer sogenannten I.S.-Glasformmaschine. Gleiche Teile wie in dem zuvor beschriebenen Ausführungsbeispiel sind in den Fig. 5 und 6 mit gleichen Bezugszahlen versehen.

An den Zylinder 5 schliesst sich gemäss Fig. 5 in axialer Richtung ein Führungszylinder 44 für den Pressstempel 10 an. Die Stange 34 ist in einer achsparallelen Bohrung 45 in einer Wand 46 des Führungszylinders 44 geführt. Das Taststück 24 ist in diesem Fall fest mit der Stange 34 verbunden und ragt in den Innenraum 19 des Zylinders 5 hinein. In einem Endbereich eines Eindringweges des Kolbens 7 tritt dieser mit einer Betätigungsfläche 47 in Berührung mit dem freien Ende des Taststükkes 24 und schiebt dieses zusammen mit der Stange 34, dem Kernträger 39' und dem Kern 39 relativ zu dem Spulenkörper 41 in Fig. 5 nach oben. Diese Relativbewegung zwischen dem Kern 39 und dem Spulenkörper 41 setzt sich fort, bis der Pressstempel 10 innerhalb des nicht gezeichneten Formwerkzeugs der Glasformmaschine seine Tiefststellung erreicht hat.

Wie auch in dem Ausführungsbeispiel gemäss den Fig. 1 bis 4 umschliesst das Formwerkzeug in an sich bekannter Weise eine Formausnehmung mit einer Öffnung im Bereich einer nicht gezeichneten Mündungsform. Der Durchmesser dieser Öffnung entspricht in der üblichen Weise einem grössten Durchmesser 48 des Pressstempels 10, den der Pressstempel 10 normalerweise in einem zylindrischen Anfangsbereich 49 aufweist. Befindet sich also die optimale Glasmasse oder mehr als diese optimale Glasmasse in dem Formhohlraum des Formwerkzeugs, so ist dieser Formhohlraum voll ausgefüllt, also ein Füllgrad von 100% erreicht. Befindet sich die optimale Glasmasse in dem Formhohlraum, dann erreicht der Pressstempel beim Eindringen seine optimale Tiefststellung. Liegt in dem Formhohlraum dagegen mehr als die optimale Glasmasse vor, dann kann der Pressstempel nicht bis zu seiner optimalen Tiefststellung vordringen, da der Glasüberschuss aus dem geschlossenen Formhohlraum nicht entweichen kann. Unter beiden Fällen wird eine sogenannte formschlüssige Verformung des Glases verstanden. Diese kann nur dann nicht eintreten, wenn sich in dem Formhohlraum so wenig Glasmasse befindet, dass selbst bei der durch einen Anschlag definierten grösstmöglichen Eindringtiefe des Pressstempels in die Form ein Füllgrad von weniger als 100% in dem Formhohlraum erreicht wird.

Gemäss Fig. 6 ist die Bohrung 45 durch eine in einer Aufnahmebohrung 50 der Wand 46 festgelegte Buchse 51 definiert. An einer unteren Stirnfläche der Buchse 51 stützt sich eine andererseits an dem Taststück 24 anliegende Druckfeder 52 ab, die das Taststück 24 in eine in Fig. 6 gezeichnete, durch einen Anschlag 53 des Zylinders 5 definierte Ausgangsstellung vorspannt.

Der Kernträger 39' ist aus Messing gefertigt und in die Stange 34 eingeschraubt. Der Kernträger 39' trägt gemäss Fig. 6 an seinem oberen Ende den magnetisierbaren Kern 39, der in eine Axialausnehmung 54 des Spulenkörpers 41 eingetaucht ist. Der Spulenkörper 41 ist in einer mit der Bohrung 45 fluchtenden Bohrung 55 in der Wand 46 festgelegt. Das elektrische Verbindungskabel 42 ist durch eine Querbohrung 56 in der Wand 46 herausgeführt.

Fig. 7 zeigt eine Abwandlung gegenüber Fig. 5 und 6 insofern, als dort die Bohrungen 45, 55 und 56 sowie die darin enthaltenen Elemente nicht in der Wand 46 des Führungszylinders 44, sondern in einer Wand 57 des Zylinders 5 angeordnet sind.

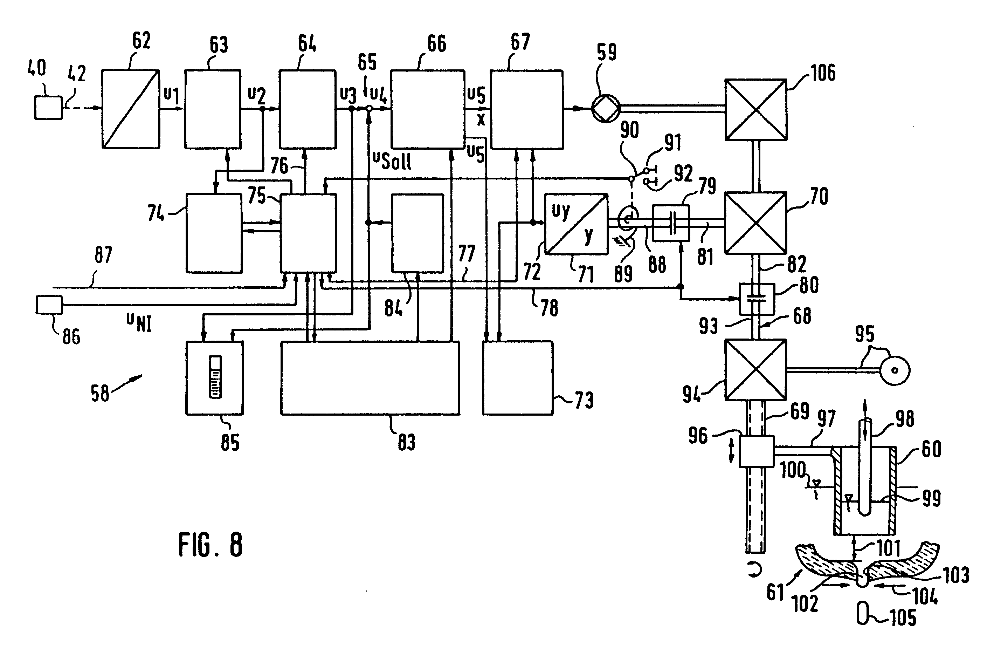

Fig. 8 stellt ein Blockschaltbild für eine Regelschaltung 58 dar, die über das elektrische Verbindungskabel 42 mit dem Differentialtransformator 40 verbunden ist. Die Regelschaltung 58 regelt einen Stellmotor 59, der in noch zu beschreibender Weise ein rohrförmiges Dosierelement 60 relativ zu einem Speiser 61 in der Höhe verstellt.

In der Regelschaltung 58 führt das Verbindungskabel 42 zu einem Messumformer 62, der mit einem Maximalwertspeicher 63 verbunden ist.

Letzterer ist mit einer *sample-and-hold*-Schaltung 64 verbunden und diese über einen Summierungspunkt 65 mit einer Bewertungsschaltung 66 für den Durchmesser des jeweils verwendeten Pressstempels 10, 11. Die Bewertungsschaltung 66 ist mit einem PID-Regler 67 mit einem integrierten Verstärker verbunden, dessen Ausgang zu dem Stellmotor 59 führt.

Eine Antriebsverbindung 68 zwischen dem Stellmotor 59 und einem als Spindel ausgebildeten Stellglied 69 für das Dosierelement 60 ist über ein Winkelgetriebe 70 mit einem Rückführgeber 71 gekuppelt, der mit einem Drehwinkelspannungswandler 72 verbunden ist, dessen Ausgang einerseits mit dem PID-Regler 67 und andererseits mit einem Linienschreiber 73 verbunden ist. Auch die Bewertungsschaltung 66 ist mit dem Linienschreiber 73 verbunden.

Der Ausgang des Maximalwertspeichers 63 ist ferner mit einer Grenzwertüberwachungsschaltung 74 verbunden, die ihrerseits in beiden Richtungen mit einer Steuerlogikschaltung 75 verbunden ist. Eine Ausgangsleitung der Steuerlogikschaltung 75 führt zu dem Maximalwertspeicher 63, eine andere Ausgangsleitung 76 führt zu der *sample-and-hold*-Schaltung 64, und weitere Ausgangsleitungen 77 und 78 der Steuerlogikschaltung 75 führen einerseits zu dem PID-Regler 67 und andererseits zu Elektromagnetkupplungen 79 und 80, die mit Abtriebswellen 81 und 82 des Winkelgetriebes 70 verbunden sind.

Ein Bedien- und Anzeigefeld 83 ist in beiden Richtungen mit der Steuerlogikschaltung 75 und ausserdem mit der Bewertungsschaltung 66 und einem Sollwertpotentiometer 84 verbunden, welch letzteres einerseits mit dem Summierungspunkt 65 und andererseits mit einem Leuchtbalkenanzeigegerät 85 verbunden ist.

Ein Näherungsinitiator 86 liefert möglichst frühzeitig, nachdem der Pressstempel 10, 11 seine Stellung mit der maximalen Eindringtiefe wieder verlassen hat, einen Arbeitstakt verkörpernde Spannungssignale $u_{NI}$ in die Steuerlogikschaltung 75. Ferner erhält die Steuerlogikschaltung 75 über eine Leitung 87 Signale, die anzeigen, ob das Formwerkzeug zu einem bestimmten Zeitpunkt mit Posten 105 versorgt wird oder nicht. Findet eine solche Versorgung aus irgendeinem Grunde nicht statt, dann wird durch die Steuerlogikschaltung 75 über die Ausgangsleitung 77 der PID-Regler 67 inaktiv geschaltet und damit der automatische Regelbetrieb unterbrochen und auf Handbetrieb umgeschaltet. Der Stellmotor 59 steht dann still. Gleichzeitig werden über die Ausgangsleitung 78 die Elektromagnetkupplungen 79, 80 ausgerückt. Sobald wieder Posten 105 zur Verfügung stehen, wird der automatische Regelbetrieb selbsttätig wieder aufgenommen.

Eine die Elektromagnetkupplung 79 mit dem Rückführgeber 71 verbindende Welle 88 ist an eine Rückstellfeder 89 angeschlossen, die beim Ausrücken der Elektromagnetkupplung 79 den Rückführgeber 71 stets in eine Mittenlage rückstellt. Der Rückführgeber 71 hat z.B. einen Stellwinkelbereich von 100°, so dass die Rückstellung durch die Rückstellfeder 89 etwa auf 50° Stellwinkel des Rückführgebers 71 erfolgt. Durch die Welle 88 des Rückführgebers 71 ist ausserdem ein mit der Steuerlogikschaltung 75 verbundenes Schaltelement 90 für dem Stellwinkelbereich des Rückführgebers 71 entsprechende Endlagenkontakte 91 und 92 antreibbar.

Eine Ausgangswelle 93 der Elektromagnetkupplung 80 ist über ein Winkelgetriebe 94 mit dem Stellglied 69 verbunden. Die Drehstellung des Stellgliedes 69 kann über eine Handverstellvorrichtung 95 und das Winkelgetriebe 94 dann geändert werden, wenn die Elektromagnetkupplung 80 ausgerückt ist. Auf das als Spindel ausgebildete Stellglied 69 ist eine Spindelmutter 96 aufgeschraubt, die jede Hubbewegung durch das Stellglied 69 über einen Arm 97 dem Dosierelement 60 mitteilt.

Im Inneren des Dosierelements 60 ist ein Plunger 98 in Richtung des Doppelpfeiles in jedem Arbeitsspiel einmal abwärts und wieder nach oben bewegbar. In dem Dosierelement steht das schmelzflüssige Glas bis zu einer Spiegellinie 99, die normalerweise etwas niedriger liegt als eine Spiegellinie 100 der das Dosierelement 60 umgebenden Glasschmelze. Zwischen einer Unterkante des Dosierelements 60 und einer Gegenfläche des Speisers 61 besteht ein Ringspalt mit einer Höhe 101, die durch Drehung des Stellgliedes 69 in der einen oder der anderen Richtung vergrössert oder verkleinert werden kann. Die Höhe 101 kann auch zu Null gemacht werden, wenn ein Austritt eines Stranges 102 des schmelzflüssigen Glases aus einem Durchlass 103 des Speisers 61 verhindert werden soll. Normalerweise aber tritt der Strang 102 aus dem Durchlass 103 aus und wird durch eine nur schematisch durch Pfeile angedeutete Schere 104 in aufeinanderfolgende Posten 105 zertrennt.

In die Antriebsverbindung 68 ist auch ein Untersetzungsgetriebe 106 mit einem Untersetzungsverhältnis von z.B. 100:1 eingeschaltet, das zur Betätigung der Handverstellvorrichtung 95 das Ausrücken der Elektromagnetkupplung 80 erforderlich macht.

Als Regler 67 kommt z.B. ein Protronicregler vom Typ TK der Firma Hartmann & Braun AG, Mess- und Regeltechnik, Postfach 900507, D-6000 Frankfurt a.M. 90, in Betracht, wie er in deren Gebrauchsanweisung 42/62 -38-2 XB mit der Druckcodierung 5.79/Hbg./3.2.1/639 beschrieben ist. Dieser Regler ist sowohl als PI-Regler als auch als PID-Regler lieferbar.

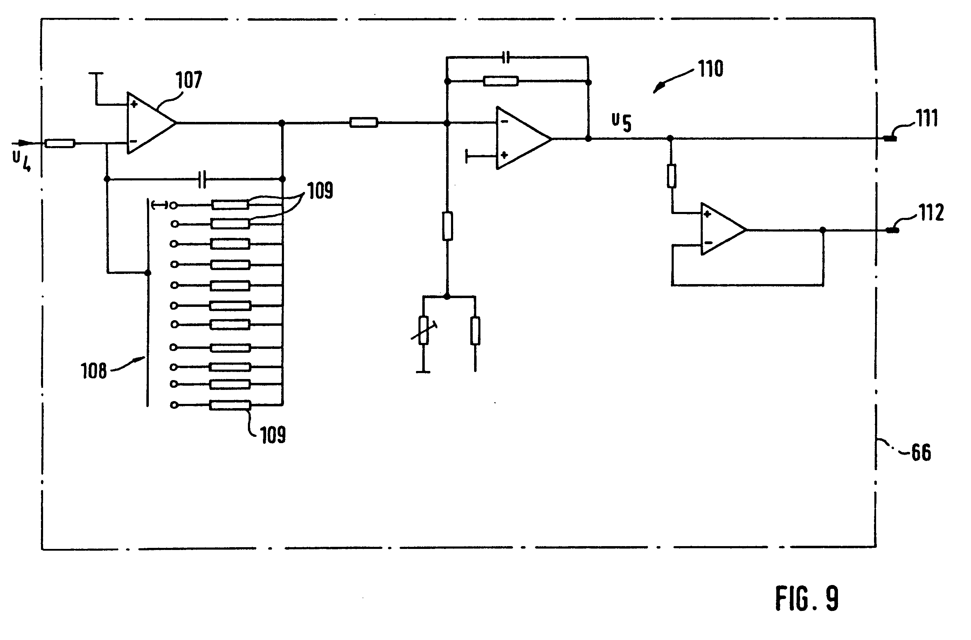

Fig. 9 zeigt Einzelheiten des Aufbaus der Bewertungsschaltung 66. Die Bewertungsschaltung 66 weist einen Verstärker 107 auf, mit dessen invertierendem Eingang eine als Stufenschalter 108 ausgebildete Rückführung verbunden ist. Eingangskontakte des Stufenschalters 108 sind jeweils mit einem Widerstand 109 verbunden, der unterschiedlichen Widerstandswert aufweist. Die einzelnen Widerstandswerte der Widerstände 109 entsprechen jeweils dem grössten Durchmesser 48 des zylindrischen Anfangsbereichs 49 eines zugehörigen Pressstempels 10, 11. Das am Ausgang des Verstärkers 107 anstehende Signal gelangt über eine Anpassungsschaltung 110 an einen zu dem PID-Regler 67 führenden Ausgang 111 and an einen zu dem Linienschreiber 73 führenden Ausgang 112.

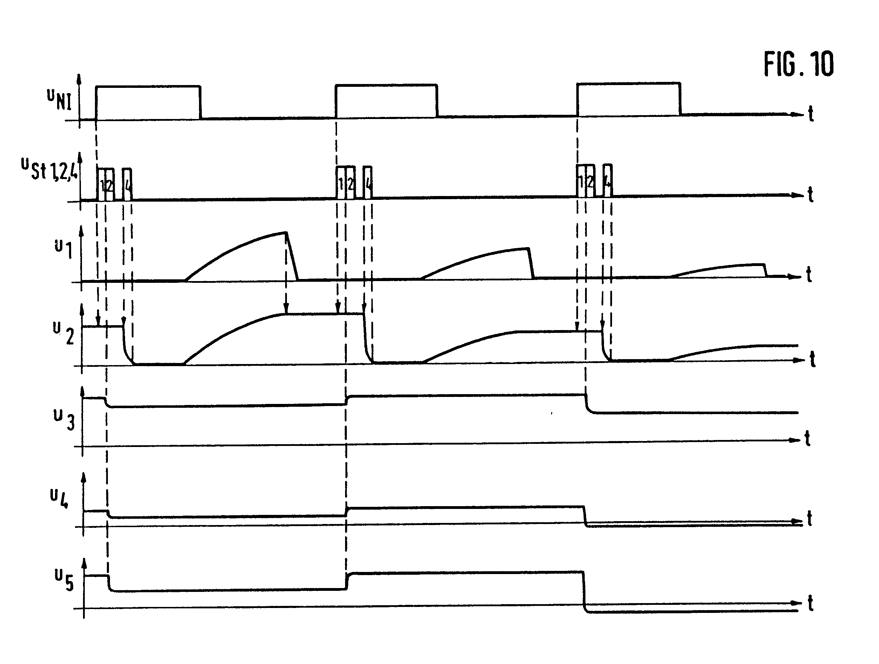

In dem Impulsdiagramm gemäss Fig. 10 sind charakteristische Spannungen über der Zeit aufgetragen.

Die Spannung $u_{NI}$ verkörpert den aus dem Herstellungsprozess gewonnenen Arbeitstakt. Der Näherungsinitiator 86 kann dazu z.B. durch das Öffnen einer nicht gezeichneten, Teile des Formwerkzeugs tragenden Formzange betätigt werden, wenn der Pressstempel 10, 11 gerade seine Stellung mit der maximalen Eindringtiefe wieder verlassen hat und sich auf dem Rückweg befindet. Die Spannung $u_{NI}$ kann alternativ auch unmittelbar aus entsprechenden Steuersignalen einer elektronischen Steuerung der Formmaschine geliefert werden. Die Spannung $u_1$ aus dem Messumformer 62 ist proportional der Stellung des Kerns 39 des Differentialtransformators 40. Die Spannung $u_2$ am Ausgang des Maximalspeichers 63 ist gleich $u_{1max}$ und behält ihren Wert bis zum Eintreffen eines Steuersignals $u_{St4}$ aus der Steuerlogikschaltung 75 über die Leitung zwischen der Steuerlogikschaltung 75 und dem Maximalwertspeicher 63. Von da ab findet ein Löschen von $u_2$ statt. Die Spannung $u_3$ steht am Ausgang der *sample-and-hold*-Schaltung 64 an. Der Wert von $u_2$ wird beim Eintreffen eines über die Ausgangsleitung 76 (Fig. 8) kommenden Steuersignals $u_{St2}$ übernommen und bleibt erhalten, bis beim nächsten Arbeitsspiel ein neuer Wert $u_2$ übernommen wird.

Am Summierungspunkt 65 steht die Spannung $u_4$ an. Sie ist die Differenz $u_3 - u_{Soll}$. Sie stellt vorzeichenrichtig die Differenz der tatsächlichen Eindringtiefe des Pressstempels 10, 11 zur Solleindringtiefe dar.

Bei der Spannung $u_5$ handelt es sich um die bewertete Massenabweichung, die aus der Pressstempelfehlstellung resultiert. Die Spannung $u_5$ ist also die bewertete Spannung $u_4$, wobei $u_4$ mit einer Konstanten K von der Dimension 1 V/g multipliziert wird. Diese Konstante K wird durch Variation der Verstärkung der Bewertungsschaltung 66 proportional zum Quadrat des jeweiligen grössten Durchmessers 48 des Pressstempels 10, 11 verändert, so dass die Spannung $u_5$ unabhängig vom grössten Durchmesser 48 der Pressstempel 10, 11 normiert in z.B. 1 V/g dem nachgeschalteten PID-Regler 67 als Eingangsgrösse eingegeben wird. Das Regelverhalten des PID-Reglers 67 braucht somit nur einmal für den Regelkreis optimiert zu werden. Die Verwendung unterschiedlicher grösster Durchmesser der Pressstempel erfordert somit keine neue Regelkreisoptimierung. Das gleiche gilt für den Linienschreiber 73, der auf einer Spur an einer geeichten und normierten Skala die Massenabweichung schreibt.

Solange ein Steuersignal $u_{St1}$ aus der Steuerlogikschaltung 75 vorhanden ist, wird die Spannung $u_2$ in der Grenzwertüberwachungsschaltung 74 auf Über- oder Unterschreitung vorgegebener Werte untersucht. Werden die voreingestellten Grenzen über- oder unterschritten, dann wird das Steuersignal $u_{St2}$ in der Steuerlogikschaltung 75 unterdrückt, und der neue Wert von $u_2$ wird nicht in die *sample-and-hold*-Schaltung 64 übernommen. Gleichzeitig wird durch die Steuerlogikschaltung 75, z.B. optisch oder akustisch, an dem Bedien- und Anzeigefeld 83 Alarm ausgelöst, über die Ausgangsleitung 77 der PID-Regler 67 in den Handbetrieb geschaltet und über die Ausgangsleitung 78 die Elektromagnetkupplungen 79, 80 ausgerückt. Die an der Grenzwertüberwachungsschaltung 74 voreingestellten Grenzen werden unterschritten, wenn sich viel zu viel Glas in dem Formwerkzeug befindet. Dies tritt z.B. ein, wenn sich aus dem vorherigen Arbeitsspiel ungewollt noch ein Glasrest in dem Formwerkzeug befindet, auf den der neue Posten 105 fällt. Andererseits werden die voreingestellten Grenzen insbesondere dann überschritten, wenn überhaupt kein Posten 105 in das Formwerkzeug gelangt. Der automatische Regelbetrieb wird durch Betätigung eines Schalters in dem Bedien- und Anzeigefeld 83 wieder aufgenommen.

Die Folge der Steuersignale oder Impulse $u_{St1,2,4}$ wird durch das Arbeitstaktspannungssignal $u_{NI}$ gestartet und in der Steuerlogikschaltung 75 durch einen Dezimalzähler erzeugt.

## Patentansprüche

1. Vorrichtung zur Einstellung der Masse von Posten (105) thermoplastischen Materials, insbesondere schmelzflüssigen Glases, die nacheinander von einem aus einem Speiser (61) austretenden Strang (102) des Materials abgetrennt, in ein Formwerkzeug einer Formmaschine eingebracht und durch einen in den Posten eindringenden Pressstempel (10; 11) formschlüssig verformt werden, wobei die je Arbeitsspiel maximale Eindringtiefe des Pressstempels (10; 11) durch einen Weggeber (21) mechanisch abgreifbar ist, und wobei der Weggeber (21) mit einem metallischen Betätigungselement (39) für einen Differentialtransformator (40) verbunden ist, an dessen Ausgang der jeweiligen maximalen Eindringtiefe proportionale elektrische Signale in eine Regelschaltung (58) zur Führung eines die Masse der Posten (105) einstellenden Dosierelements (60) eingebbar sind, dadurch gekennzeichnet, dass in der Regelschaltung (58) ein Ausgang des Differentialtransformators (40) mit einem Messumformer (62) verbunden ist, dessen Ausgang mit einem Maximalwertspeicher (63) verbunden ist, dessen Ausgang mit einer *sample-and-hold*-Schaltung (64) verbunden ist, deren Ausgang über einen Summierungspunkt (65) mit einem PI-Regler oder PID-Regler (67) verbunden ist, dessen Ausgang mit einem das Dosierelement (60) einstellenden Stellmotor (59) verbunden ist, dass an eine Antriebsverbindung (68) zwischen dem Stellmotor (59) und einem Stellglied (69) für das Dosierelement (60) ein Rückführgeber (71) angeschlossen ist, der mit einem Drehwinkelspannungswandler (72) verbunden ist, dessen Ausgang mit dem PI- oder PID-Regler (67) verbunden ist, dass ein Bedien- und Anzeigefeld (83) vorgesehen ist, das in beiden Richtungen mit einer Steuerlogikschaltung (75) verbunden ist, die über je einen Ausgang mit dem Maximalwertspeicher (63) und mit der *sample-and-hold*-Schaltung (64) verbunden ist, dass einem Eingang der Steuerlogikschaltung (75) in jedem Arbeitsspiel der Formmaschine ein aus dem Arbeitsspiel abgeleitetes Taktsignal (vgl. 86) zuleitbar ist, und dass das Bedien- und Anzeigefeld (83) mit einem einen die optimale Eindringtiefe des Pressstempels (10; 11) verkörpernden Spannungssollwert ($U_{Soll}$) liefernden Sollwertpotentiometer (84) verbunden ist, dessen Ausgang mit dem Summierungspunkt (65) verbunden ist.

2. Vorrichtung nach Anspruch 1, dadurch gekennzeichnet, dass zwischen den Summierungspunkt (65) und den PI- oder PID-Regler (67) eine den maximalen Durchmesser des jeweiligen Pressstempels (10; 11) berücksichtigende Bewertungsschaltung (66) eingeschaltet ist, und dass das Bedien- und Anzeigefeld (83) mit der Bewertungsschaltung (66) verbunden ist.

3. Vorrichtung nach einem der Ansprüche 1 oder 2, dadurch gekennzeichnet, dass der Ausgang der *sample-and-hold*-Schaltung (64) und der Ausgang des Sollwertpotentiometers (84) jeweils mit einem Leuchtbalkenanzeigegerät (85) verbunden sind.

4. Vorrichtung nach einem der Ansprüche 2 oder 3, dadurch gekennzeichnet, dass der Ausgang der Bewertungsschaltung (66) und der Ausgang des Drehwinkelspannungswandlers (72) jeweils mit einer Schreibspur eines Linienschreibers (73) verbunden sind.

5. Vorrichtung nach einem der Ansprüche 1 bis 4, dadurch gekennzeichnet, dass zwischen die Anriebsverbindung (68) und den Rückführgeber (71) eine mit der Steuerlogikschaltung (75) elektrisch verbundene Elektromagnetkupplung (79) eingeschaltet ist, bei deren Ausrücken der Rückführgeber (71) durch eine Rückstellfeder (89) in eine Mittenlage rückstellbar ist, dass durch den Rückführgeber (71) ein mit der Steuerlogikschaltung (75) verbundenes Schaltelement (90) für Endlagenkontakte (91, 92) betätigbar ist, und dass die Steuerlogikschaltung (75) über eine Ausgangsleitung (77) mit dem PI- oder PID-Regler (67) verbunden ist.

6. Vorrichtung nach einem der Ansprüche 1 bis 5, dadurch gekennzeichnet, dass in die Antriebsverbindung (68) zwischen dem Stellmotor (59) und dem Stellglied (69) eine mit der Steuerlogikschaltung (75) elektrisch verbundene Elektromagnetkupplung (80) eingeschaltet ist, dass eine Handstellvorrichtung (95) für das Stellglied (69) vorgesehen ist, und dass die Steuerlogikschaltung (75) über eine Ausgangsleitung (77) mit dem PI- oder PID-Regler (67) verbunden ist.

7. Vorrichtung nach einem der Ansprüche 1 bis 6, dadurch gekennzeichnet, dass der Ausgang des Maximalwertspeichers (63) ferner mit einer Grenzwertüberwachungsschaltung (74) verbunden ist, die in beiden Richtungen mit der Steuerlogikschaltung (75) verbunden ist, und dass die Steuerlogikschaltung (75) über eine Ausgangsleitung (77) mit dem PI- oder PID-Regler (67) verbunden ist.

8. Vorrichtung nach einem der Ansprüche 1 bis 7, dadurch gekennzeichnet, dass der Steuerlogikschaltung (75) über eine Leitung (87) Signale zuführbar sind, die anzeigen, ob das Formwerkzeug zu einem bestimmten Zeitpunkt mit Posten (105) versorgt wird oder nicht, und dass die Steuerlogikschaltung (75) über eine Ausgangsleitung (77) mit dem PI- oder PID-Regler (67) verbunden ist.

9. Vorrichtung nach einem der Ansprüche 1 bis 8, dadurch gekennzeichnet, dass bei einem an einer Kolbenstange (12) eines in einem Zylinder (5) verschiebbaren Kolbens (7) befestigten Pressstempel (10) der Weggeber (21) eine verschiebbar geführte Stange (34) und ein in einer Bewegungsbahn der Kolbenstange (12) oder des Kolbens (7) angeordnetes, mit der Stange (34) verbundenes Taststück (24) aufweist, wobei die Stange (34) in einer achsparallelen Bohrung (45) in einer Wand (57; 46) des Zylinders (5) oder eines mit dem Zylinder (5) verbundenen Bauteils (vgl. 44) geführt ist und das Taststück (24) in einen Innenraum (19) des Zylinders (5) in eine definierte Ausgangsstellung im Endbereich eines Eindringweges der Kolbenstange (12) oder des Kolbens (7) hineinragt, dass ein Spulenkörper (41) des Differentialtransformators (40) in einer mit der achsparallelen Bohrung (45) fluchtenden Bohrung (55) in der Wand (57; 46) des Zylinders (5) oder des Bauteils (vgl. 44) angeordnet ist, und dass als Betätigungselement ein Kern (39) mit der Stange (34) verbunden ist und in den Spulenkörper (41) eintaucht.

10. Vorrichtung nach einem der Ansprüche 1 bis 8, dadurch gekennzeichnet, dass bei einem an einer Kolbenstange (12) eines in einem Zylinder (5; 6) verschiebbaren Kolbens (7) befestigten Pressstempel (10; 11) der Weggeber (21) eine verschiebbar geführte Stange (34) und ein in einer Bewegungsbahn der Kolbenstange (12) oder des Kolbens (7) angeordnetes, mit der Stange (34) verbundenes Taststück (24) aufweist, dass das Taststück (24) einen Tastarm (25) aufweist und an einer relativ zu dem Zylinder (5; 6) schwenkbar gelagerten Welle (22) befestigt ist, dass an der Welle (22) ferner ein in Wirkberührung mit der Stange (34) bringbarer Betätigungsarm (31) befestigt ist, und dass als Betätigungselement ein Kern (39) mit der Stange (34) verbunden ist und in einen Spulenkörper (41) des Differentialtransformators (40) eintaucht.

11. Vorrichtung nach Anspruch 10, dadurch gekennzeichnet, dass an der Welle (22) ausserdem ein Vorspannarm (26) befestigt ist, zwischen dessen freiem Ende und einem zylinderfesten Punkt eine Zugfeder (28) derart eingespannt ist, dass ein freies Ende des Tastarms (25) in ständiger Anlage an der Kolbenstange (12) gehalten ist.

12. Vorrichtung nach Anspruch 11, dadurch gekennzeichnet, dass die Winkelstellung des Tastarms (25) und/oder des Betätigungsarms (31) und/oder des Vorspannarms (26) relativ zu der Welle (22) einstellbar ist.

13. Vorrichtung nach einem der Ansprüche 10 bis 12, dadurch gekennzeichnet, dass die Stange (34) durch eine an ihrer Führung (vgl. 35) abgestützte Feder (38) in eine Ausgangsstellung vorgespannt ist.

14. Vorrichtung nach einem der Ansprüche 10 bis 13, dadurch gekennzeichnet, dass der Zylinder (5; 6) an einem bezüglich des Formwerkzeugs hin und zurück bewegbaren, antreibbaren Träger (vgl. 1, 2) befestigt ist, und dass die Stange (34) und der Differentialtransformator (40) maschinenfest derart angeordnet sind, dass ein freies Ende (32) des Betätigungsarms (31) am Ende der Hinbewegung in Berührung mit der Stange (34) steht.

**Claims**

1. Apparatus for adjusting the mass of gobs (105) of thermoplastic material, especially molten glass, which are severed one after the other from a strand (102) of the material issuing from a feeder (61), fed into a moulding tool of a forming machine and deformed in a positive manner by a pressing plunger (10; 11) penetrating into the gob, in which the maximal penetration depth of the pressing plunger (10; 11) in each operating cycle is mechanically detected by a displacement sensor (21), and in which the displacement sensor (21) is connected to a metallic actuating element (39) for a differential transformer (40) at whose output electrical signals, which are applied to a regulating circuit (58) for the control of a dosing element (60) which adjusts the mass of the gobs (105), characterised in that in the regulating circuit (58) an output of the differential transformer (40) is connected to a measurement transducer (62) whose output is connected to a maximal-value store (63) whose output is connected *via* a summing junction (65) to a PI-regulator or PID-regulator (67) whose output is connected to a setting motor (59) which adjusts the dosing element (60), in that a feedback sensor (71) is connected to a drive connection (68) between the setting motor (59) and a setting member (69) for the dosing element (60), the feedback sensor being connected to a rotary-angle-to-voltage transducer (72) whose output is connected to the PI- or PID-regulator (67), in that a control and display panel (83) is provided which is connected for two-way communication with a control logic circuit (75) which is connected *via* respective outputs to the maximal-value store (63) and to the sample-and-hold circuit (64), in that one input to the control logic circuit (75) is arranged to receive in each operating cycle of the forming machine a initialising signal (see 86) derived from the operating cycle, and in that the control and display panel (83) is connected to a desired-value potentiometer (84) which supplies a desired-value voltage ($U_{Soll}$) representing the optimal penetration depth of the pressing plunger (10; 11) and whose output is connected to the summing junction (65).

2. Apparatus according to Claim 1, characterised in that a weighting circuit (66) which takes into account the maximal diameter of the respective pressing plunger (10; 11) is connected between the summing junction (65) and the PI- or PID-regulator (67), and in that the control and display panel (83) is connected to the weighting circuit (66).

3. Apparatus according to Claim 1 or 2, characterised in that the output of the sample-and-hold circuit (64) and the output of the desired-value potentiometer (84) are connected respectively to an illuminated-bar display instrument (85).

4. Apparatus according to Claim 2 or 3, characterised in that the output of the weighting circuit (66) and the output of the rotary-angle-to-voltage transducer (72) are each connected to a recording track of a line recorder (73).

5. Apparatus according to one of Claims 1 to 4, characterised in that an electromagnetic coupling (79) connected electrically to the control logic circuit (75) is connected between the drive connection (68) and the feedback sensor (71), wherein, when the electromagnetic coupling is disengaged, the feedback sensor (71) can be reset to a middle setting by a restoring spring (89), in that a switch element (90) movable between end-position contacts (91, 92) and connected to the control logic circuit (75) can be actuated by the feedback sensor (71), and in that the control logic circuit (75) is connected by way of an output lead (77) to the PI- or PID-regulator (67).

6. Apparatus according to one of Claims 1 to 5, characterised in that an electromagnetic coupling (80) connected electrically to the control logic circuit (75) is connected into the drive connection (68) between the setting motor (59) and the setting member (69), in that a manually adjustable device (95) is provided for the setting member (69), and in that the control logic circuit (75) is connected by way of an output lead (77) to the PI- or PID-regulator (67).

7. Apparatus according to one of Claims 1 to 6, characterised in that the output of the maximal-value store (63) is further connected to a limit-value monitoring circuit (74) which is connected for two-way communication with the control logic circuit (75), and in that the control logic circuit (75) is connected by way of an output lead (77) to the PI- or PID-regulator (67).

8. Apparatus according to one of Claims 1 to 7, characterised in that signals can be fed to the control logic circuit (75) by way of a lead (87) which indicate whether at a predetermined time the moulding tool is or is not being supplied with gobs (105), and in that the control logic circuit (75) is connected by way of an output lead (77) to the PI- or PID-regulator (67).

9. Apparatus according to one of Claims 1 to 8, characterised in that, with a pressing plunger (10) secured to a piston rod (12) of a piston (7) displaceable in a cylinder (5), the displacement sensor (21) comprises a displaceably guided rod (34) and a sensing member (24) connected to the rod (34) and arranged in a path of movement of the piston rod (12) or of the piston (7), wherein the rod (34) is guided in a paraxial bore (45) in a wall (57; 46) of the cylinder (5) or of a component (see 44) connected to the cylinder (5) and the sensing member (24) projects into an internal chamber (19) of the cylinder (5) in a defined starting position in the end zone of a penetrating path of the piston rod (12) or of the piston (7), in that a coil body (41) of the differential transformer (40) is arranged in a bore (55) which is aligned with the paraxial bore (45) and which is formed in the wall (57; 46) of the cylinder (5) or of the component (see 44), and in that a core (39) is connected to the rod (34) as the actuating element and extends into the coil body (41).

10. Apparatus according to one of Claims 1 to 8, characterised in that, with a pressing plunger (10; 11) secured to a piston rod (12) of a piston (7) displaceable in a cylinder (5; 6), the displacement sensor (21) comprises a displaceably guided rod (34) and a sensing member (24) connected to the rod (34) and arranged in a path of movement of the piston rod (12) or of the piston (7), in that the sensing member (24) comprises a sensing arm (25) and is secured to a shaft (22) which is pivotally mounted relative to the cylinder (5; 6), in that an actuating arm (31) which can be brought into operative contact with the rod (34) is secured to the shaft (22), and in that a core (39) is connected to the rod (34) as the actuating element and extends into a coil body (41) of the differential transformer (40).

11. Apparatus according to Claim 10, characterised in that a biassing arm (26) is connected additionally to the shaft (22), and a tension spring (28) is connected between the free end of the biassing arm and a point fixed on the cylinder such that a free end of the sensing arm (25) is held in constant engagement against the piston rod (12).

12. Apparatus according to Claim 11, characterised in that the angular positions of the sensing arm (25) and/or of the actuating arm (31) and/or of the biassing arm (26) is adjustable relative to the shaft (22).

13. Apparatus according to one of Claims 10 to 12, characterised in that rod (34) is biassed into a starting position by a spring (38) supported on its guide (see 35).

14. Apparatus according to one of Claims 10 to 13, characterised in that the cylinder (5; 6) is secured to a carrier (see 1, 2) which is drivable and movable forwards and backwards relative to the moulding tool, and in that the rod (34) and the differential transformer (40) are arranged stationarily on the machine in such a manner that a free end (32) of the actuating arm (31) is in engagement with the rod (34) at the end of the forward movement.

## Revendications

1. Appareil à régler la masse de lots (105) de matière thermoplastique, en particulier de verre liquide, qui sont séparés successivement d'un boudin (102) de la matière, sortant d'un avant-corps (61), introduits dans un outil de moule d'une machine à mouler et déformés rigidement par un poinçon (10; 11) pénétrant dans le lot, la profondeur maximale de pénétration du poinçon (10; 11), par cycle de travail, pouvant être détectée mécaniquement par un transmetteur de course (21) et le transmetteur de course (21) étant relié à un élément d'actionnement métallique (39) d'un transformateur différentiel (40) à la sortie duquel des signaux électriques proportionnels à la profondeur maximale momentanée de pénétration peuvent être introduits dans un circuit de régulation (58) pour le guidage d'un élément doseur (60) réglant la mase des lots (105), caractérisé par le fait que, dans le circuit de régulation (58), une sortie du transformateur différentiel (40) est reliée à un transformateur de mesure (62) dont la sortie est reliée à une mémoire de valeur maximale (63) dont la sortie est reliée à un circuit d'échantillonnage et de maintien (64) dont la sortie est reliée, par l'intermédiaire d'un point de sommation (65), à un régulateur PI ou à un régulateur PID (67) dont la sortie est reliée à un servomoteur (59) réglant l'élément doseur (60), que, à une liaison d'entraînement (68) entre le servomoteur (59) et un organe de réglage final (69) de l'élément doseur (60), fait suite un transmetteur de réaction (71) qui est relié à un transducteur d'angle de rotation-tension (72) dont la sortie est reliée au régulateur PI ou PID (67), qu'il est prévu une zone de maniement et d'affichage (83) qui est reliée dans les deux sens à un circuit logique de commande (75) qui est relié, par des sorties respectives, à la mémoire de valeur maximale (63) et au circuit d'échantillonnage et de maintien (64), que, à une entrée du circuit logique de commande (75), peut être amené, à chaque cycle de travail de la machine à mouler, un signal de rythme (voir 86) tiré du cycle de travail, et que la zone de maniement et d'affichage (83) est reliée à un potentiomètre à valeur de consigne (84) fournissant une valeur de consigne de tension ($U_{Soll}$) qui concrétise la profondeur optimale de pénétration du poinçon (10; 11) et dont la sortie est reliée au point de sommation (65).

2. Appareil selon la revendication 1, caractérisé par le fait que, entre le point de sommation (65) et le régulateur PI ou PID (67), est interposé un circuit de pondération (66) tenant compte du diamètre maximal du poinçon (10; 11) dont il s'agit, et que la zone de maniement et d'affichage (83) est reliée au circuit de pondération (66).

3. Appareil selon l'une des revendications 1 ou 2, caractérisé par le fait que la sortie du circuit d'échantillonnage et de maintien (64) et la sortie du potentiomètre à valeur de consigne (84) sont reliées chacune à un affichage à barres lumineuses (85).

4. Appareil selon l'une des revendications 2 ou 3, caractérisé en ce que la sortie du circuit de pondération (66) et la sortie du transducteur angle de rotation-tension (72) sont reliées chacune à une piste d'écriture d'un traceur de lignes (73).

5. Appareil selon l'une des revendications 1 à 4, caractérisé en ce que, entre la liaison d'entraînement (68) et le transmetteur de réaction (71), est interposé un accoupelemnt électromagnétique (79) relié électriquement au circuit logique de commande (75) et lors du débrayage duquel le transmettteur de réaction (71) peut être rappelé à une position moyenne par un ressort de rappel (89), que, par le transmetteur de réaction (71), peut être actionné un élément de commutation (90), relié au circuit logique de commande (75) et adjoint à des contacts de position finale (91, 92), et que le circuit logique de commande (75) est relié, par une ligne de sortie (77), au régulateur PI ou PID (67).

6. Appareil selon l'une des revendications 1 à 5, caractérisé en ce que, dans la liaison d'entraînement (68) entre le servomoteur (59) et l'organe de réglage final (69), est interposé un accouplement électromagnétique (80) relié électriquement au circuit logique de commande (75), qu'un dispositif de réglage manuel (95) est prévu pour l'organe de réglage final (69), et que le circuit logique de commande (75) est relié, par une ligne de sortie (77), au régulateur PI ou PID (67).

7. Appareil selon l'une des revendications 1 à 6, caractérisé en ce que la sortie de la mémoire de valeur maximale (63) est, en outre, reliée à un circuit de surveillance de valeur limite (74) qui est relié dans les deux sens au circuit logique de commande (75), et que le circuit logique de commande (75) est relié, par une ligne de sortie (77), au régulateur PI ou PID (67).

8. Appareil selon l'une des revendications 1 à 7, caractérisé en ce que, au circuit logique de commande (75), peuvent être amenés, par une ligne (87), des signaux qui indiquent si l'outil de moule est ou non alimenté en lots (105) à un moment déterminé, et que le circuit logique de commande (75) est relié, par une ligne de sortie (77), au régulateur PI ou PID (67).

9. Appareil selon l'une des revendications 1 à 8, caractérisé en ce que, dans le cas d'un poinçon (10) fixé à une tige de piston (12) d'un piston (7) pouvant coulisser dans un cylindre (5), le transmetteur de course (21) présente une tige (34) guidée de manière à pouvoir coulisser et un élément palpeur (24) relié à la tige (34) et disposé dans une trajectoire de la tige de piston (12) ou du piston (7), la tige (34) étant guidée dans une perforation parallèle à l'axe (45) prévue dans une paroi (57; 46) du cylindre (5) ou d'un élément structural relié au cylindre (5) (voir 44), et l'élément palpeur (24) pénétrant dans une cavité intérieure (19) du cylindre (5), à une position initiale définie, dans la région terminale d'une course de pénétration de la tige de piston (12) ou du piston (7), qu'un corps de bobine (41) du transformateur différentiel (40) est disposé dans une perforation (55), prévue dans la paroi (57; 46) du cylindre (5) ou de l'élément structural (voir 44) et alignée sur la perforation parallèle à l'axe (45), et que, comme élément d'actionnement, un noyau (39) est relié à la tige (34) et pénètre dan le corps de bobine (41).

10. Appareil selon l'une des revendications 1 à 8, caractérisé en ce que, dans le cas d'un poinçon (10; 11) fixé à une tige de piston (12) d'un piston (7) pouvant coulisser dans un cylindre (5; 6), le transmetteur de course (21) présente une tige (34) guidée de manière à pouvoir coulisser et un élément palpeur (24) disposé dans une trajectoire de la tige de piston (12) ou du piston (7) et relié à la tige (34), que l'élément palpeur (24) présente un bras palpeur (25) et est fixé à un arbre (22) monté de manière à pouvoir pivoter relativement au cylindre (5; 6), que, à l'arbre (22), est en outre fixé un bras d'actionnement (31) pouvant être amené en contact d'action avec la tige (34), et que, comme élément d'actionnement, un noyau (39) est relié à la tige (34) et pénètre dans un corps de bobine (41) du transformateur différentiel (40).

11. Appareil selon la revendication 10, caractérisé en ce que, à l'arbre (22), est en outre fixé un bras de précharge (26) entre l'extrémité libre duquel et un point solidaire du cylindre un ressort de traction (28) est accroché de telle sorte qu'une extrémité libre du bras palpeur (25) est maintenue constamment appliquée à la tige de piston (12).

12. Appareil selon la revendication 11, caractérisé en ce que la position angulaire du bras palpeur (25) et/ou du bras d'actionnement (31) et/ou du bras de précharge (26) relativement à l'arbre (22) est réglable.

13. Appareil selon l'une des revedications 10 à 12, caractérisé en ce que la tige (34) est préchargée vers une position initiale par un ressort (38) s'appuyant sur son guide (voir 35).

14. Appareil selon l'une des revendications 10 à 13, caractérisé en ce que le cylindre (5; 6) est fixé à un support (voir 1, 2) pouvant aller et venir relativement à l'outil de moule, et que la tige (34) et le transformateur différentiel (40) sont disposés solidairement à la machine de telle sorte qu'une extrémité libre (32) du bras d'actionnement (31) est en contact avec la tige (34) à la fin du mouvement d'aller.

FIG. 1

FIG. 2

# FIG. 3

FIG. 4

# FIG. 5

# FIG. 6

# FIG. 7

FIG. 8

FIG. 9

FIG. 10